# EUROPEAN PATENT APPLICATION

(11) **EP 4 597 903 A1**
(43) Date of publication of application: **06.08.2025**
(21) Application number: 23872980.0
(22) Date of filing: 22.09.2023
(51) Int. Cl.: H04L 5/00, H04W 72/23

(54) **METHOD AND DEVICE FOR TRANSMITTING AND RECEIVING SOUNDING REFERENCE SIGNAL IN WIRELESS COMMUNICATION SYSTEM**

(30) Priority: 29.09.2022 KR 20220124613
(71) Applicant: LG Electronics Inc., Yeongdeungpo-gu Seoul 07336 (KR)
(72) Inventor: GO, Seongwon, Seoul 06772 (KR); KANG, Jiwon, Seoul 06772 (KR); PARK, Haewook, Seoul 06772 (KR)
(74) Representative: Plasseraud IP
(86) International application number: PCT/KR2023/014546
(87) International publication number: WO 2024/071863

(57) **Abstract**

A method performed by a user equipment (UE) according to one embodiment of the present disclosure comprises the steps of: receiving configuration information related to a sounding reference signal (SRS); and transmitting the SRS based on at least one SRS resource. The at least one SRS resource is associated with eight ports. The eight ports are divided and mapped to a plurlaity of symbols related to the at least one SRS resource, and a number of one or more ports associated with each of the plurality of symbols is the same.

## Description

### [TECHNICAL FIELD]

The present disclosure relates to a method and device for transmitting and receiving a sounding reference signal in a wireless communication system.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

According to Rel-18 MIMO SRS enhancement, uplink 8 Tx transmission is supported. A method for supporting 8-port SRS for the uplink 8 Tx transmission (e.g., PUSCH transmission based on up to eight layers/eight antenna ports) is under discussion.

### [DISCLOSURE]

### [TECHNICAL PROBLEM]

When configuring the aforementioned 8-port SRS in one symbol, the power allocated to each port for SRS transmission may become too low. In other words, 8-port SRS transmitted in one symbol may not be appropriate for UL channel estimation for each port of a base station.

It is an aspect of the present disclosure to propose a method for solving the aforementioned problem.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) in a wireless communication system according to one embodiment of the present disclosure comprises the steps of: receiving configuration information related to a sounding reference signal (SRS); and transmitting the SRS based on at least one SRS resource. The configuration information includes information for the at least one SRS resource.

The at least one SRS resource is associated with eight ports.

The eight ports are divided and mapped to a plurality of symbols related to the at least one SRS resource, and a number of one or more ports associated with each of the plurality of symbols is the same.
i) first parameters related to frequency domain, ii) second parameters related to time domain, and iii) third parameters related to sequence may be configured in the at least one SRS resource.

The first parameters may include i) transmissionComb related to Transmission comb value, ii) freqDomainPosition related to frequency domain position, iii) freqDomainShift related to frequency domain shift, and iv) freqHopping related to frequency hopping.

The second parameters may include i) startPosition related to start symbol position, ii) nrofSymbols related to the number of symbols, and iii) repetitionFactor related to repetitions of the SRS.

The third parameters may include i) groupOrSequenceHopping related to group hopping and/or sequence hopping and ii) sequenceId for sequence initialization.

At least one of the first parameters may be configured as a plural number based on the number of the plurality of symbols.

At least one of the second parameters may be configured as a plural number based on the number of the plurality of symbols.

Some of the plurality of parameters configured based on the number of the plurality of symbols may be set to the same value.

The plurality of parameters configured based on the number of the plurality of symbols may include i) a parameter related to the first symbol among the plurality of symbols and ii) parameters determined based on the parameter related to the first symbol and offsets related to remaining symbols.

Indexes of the one or more ports associated with each symbol may be configured in the at least one SRS resource.

The at least one SRS resource may be based on an SRS resource set for antenna switching. The plurality of symbols may be consecutive symbols that are configured in the at least one SRS resource, without configuring a guard period for antenna switching.

The at least one SRS resource may include multiple SRS resources, and the plurality of symbols may include one or more symbols that are configured based on the second parameters of each SRS resource.

A position of one or more symbols configured in one of the multiple SRS resources may be different from a position of one or more symbols configured in another one of the multiple SRS resources.

A position of one or more symbols configured in one of the multiple SRS resources may be identical to a position of one or more symbols configured in another one of the multiple SRS resources.

A Transmission Configuration Indicator (TCI) state and/or spatial relation information may be configured in each SRS resource based on a capability of the UE related to simultaneous transmission across multi panels (STxMP).

The TCI state and/or the spatial relation information which are configured in each SRS resource may be the same, based on the STxMP not being supported by the UE.

The plurality of symbols may be two symbols. Four ports among the eight ports may be mapped to a first symbol among the two symbols. Remaining four ports among the eight ports may be mapped to a second symbol among the two symbols.

A user equipment (UE) operating in a wireless communication system according to another embodiment of the present disclosure comprises: one or more transceivers; one or more processors; and one or more memories operably connectable to the one or more processors, and storing instructions configured for the one or more processors to perform operations, based on execution by the one or more processors.

The operations may include: receiving configuration information related to a sounding reference signal (SRS); and transmitting the SRS based on the at least one SRS resource. The configuration information includes information for at least one SRS resource.

The at least one SRS resource is associated with eight ports.

The eight ports are divided and mapped to a plurality of symbols related to the at least one SRS resource, and a number of one or more ports associated with each of the plurality of symbols is the same.

A device according to yet another embodiment of the present disclosure comprises one or more memories and one or more processors functionally connected to the one or more memories.

The one or more memories store instructions configured for the one or more processors to perform operations, based on execution by the one or more processors.

The operations include: receiving configuration information related to a sounding reference signal (SRS); and transmitting the SRS based on the at least one SRS resource. The configuration information includes information for at least one SRS resource.

The at least one SRS resource is associated with eight ports.

The eight ports are divided and mapped to a plurality of symbols related to the at least one SRS resource, and a number of one or more ports associated with each of the plurality of symbols is the same.

One or more non-transitory computer-readable media according to a further embodiment of the present disclosure stores one or more commands,

One or more commands executable by one or more processors are configured for the one or more processors to perform operations.

The operations include: receiving configuration information related to a sounding reference signal (SRS); and transmitting the SRS based on the at least one SRS resource. The configuration information includes information for at least one SRS resource.

The at least one SRS resource is associated with eight ports.

The eight ports are divided and mapped to a plurality of symbols related to the at least one SRS resource, and a number of one or more ports associated with each of the plurality of symbols is the same.

A method performed by a base station in a wireless communication system according to a further embodiment of the present disclosure comprises: transmitting configuration information related to a sounding reference signal (SRS); and receiving the SRS based on the at least one SRS resource. The configuration information includes information for at least one SRS resource.

The at least one SRS resource is associated with eight ports.

The eight ports are divided and mapped to a plurality of symbols related to the at least one SRS resource, and a number of one or more ports associated with each of the plurality of symbols is the same.

A base station that operates in a wireless communication system according to a further embodiment of the present disclosure comprises: one or more transceivers; one or more processors; and one or more memories operably connectable to the one or more processors, and storing instructions configured for the one or more processors to perform operations, based on execution by the one or more processors.

The operations include: transmitting configuration information related to a sounding reference signal (SRS); and receiving the SRS based on the at least one SRS resource.

The at least one SRS resource is associated with eight ports. The configuration information includes information for at least one SRS resource.

The eight ports are divided and mapped to a plurality of symbols related to the at least one SRS resource, and a number of one or more ports associated with each of the plurality of symbols is the same.

### [ADVANTAGEOUS EFFECTS]

According to an embodiment of the present disclosure, eight ports are evenly distributed to a plurality of symbols to transmit an SRS. Accordingly, a power boosting effect may be achieved as compared with transmission with eight ports configured in one symbol.

Furthermore, the accuracy of UL channel estimation by the base station may be improved as compared with SRS transmission based on eight ports in one symbol. Accordingly, the reliability of uplink channel transmission scheduled after SRS transmission may be improved. In other words, uplink channel transmission scheduling based on up to eight antenna ports may be performed (based on antenna port(s)) based on SRS resources more appropriate in terms of UL channels.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF DRAWINGS]

FIG. 1 is a flowchart showing an example of a UL BM procedure using an SRS.
FIG. 2 is a diagram illustrating flexible aperiodic SRS transmission timing control.
FIG. 3 is a diagram illustrating partial band SRS transmission.
FIG. 4 is a flowchart for describing a method performed by a user equipment according to an embodiment of the present disclosure.
FIG. 5 is a flowchart for describing a method performed by a BS according to another embodiment of the present disclosure.
FIG. 6 is a diagram illustrating configurations of a first device and a second device according to an embodiment of the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### SRS related operation

The UE may be configured with one or more Sounding Reference Symbol (SRS) resource sets configured by (higher layer parameter) SRS-ResourceSet (through higher layer signaling, RRC signaling, etc.). For each SRS resource set, the UE may be configured with K (≥ 1) SRS resources (higher later parameter SRS-resources). Here, K is a natural number and a maximum value of K is indicated by SRS_capability.

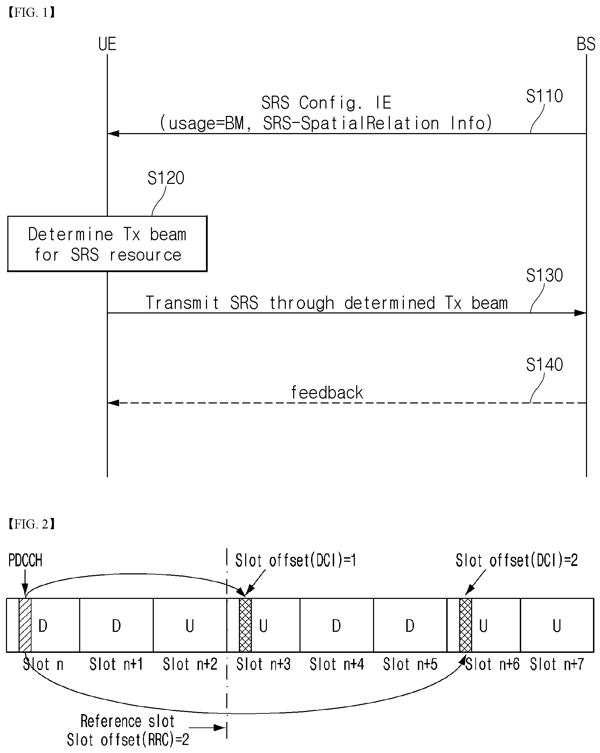

FIG. 1 is a flowchart showing an example of a UL BM procedure using an SRS.
- The UE receives, from the BS, RRC signaling (e.g., SRS-Config IE) including a usage parameter (S110). As an example, the usage parameter may be configured as 'beam management', 'codebook', 'nonCodebook', or 'antennaSwitching'.

Table 1 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

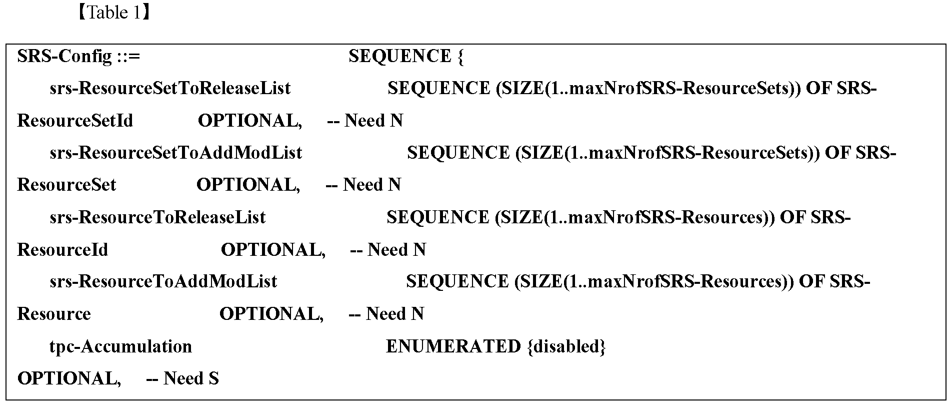

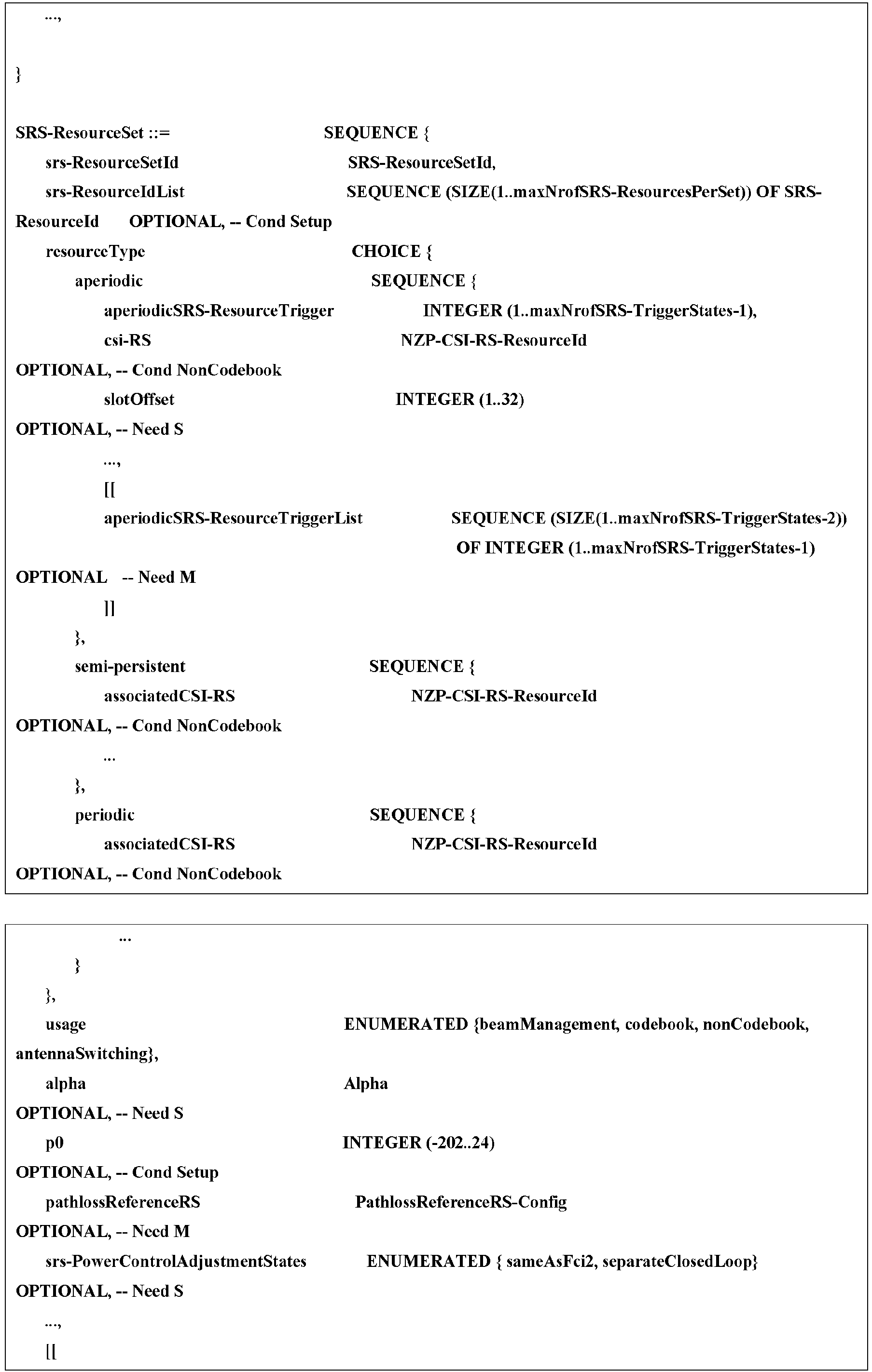

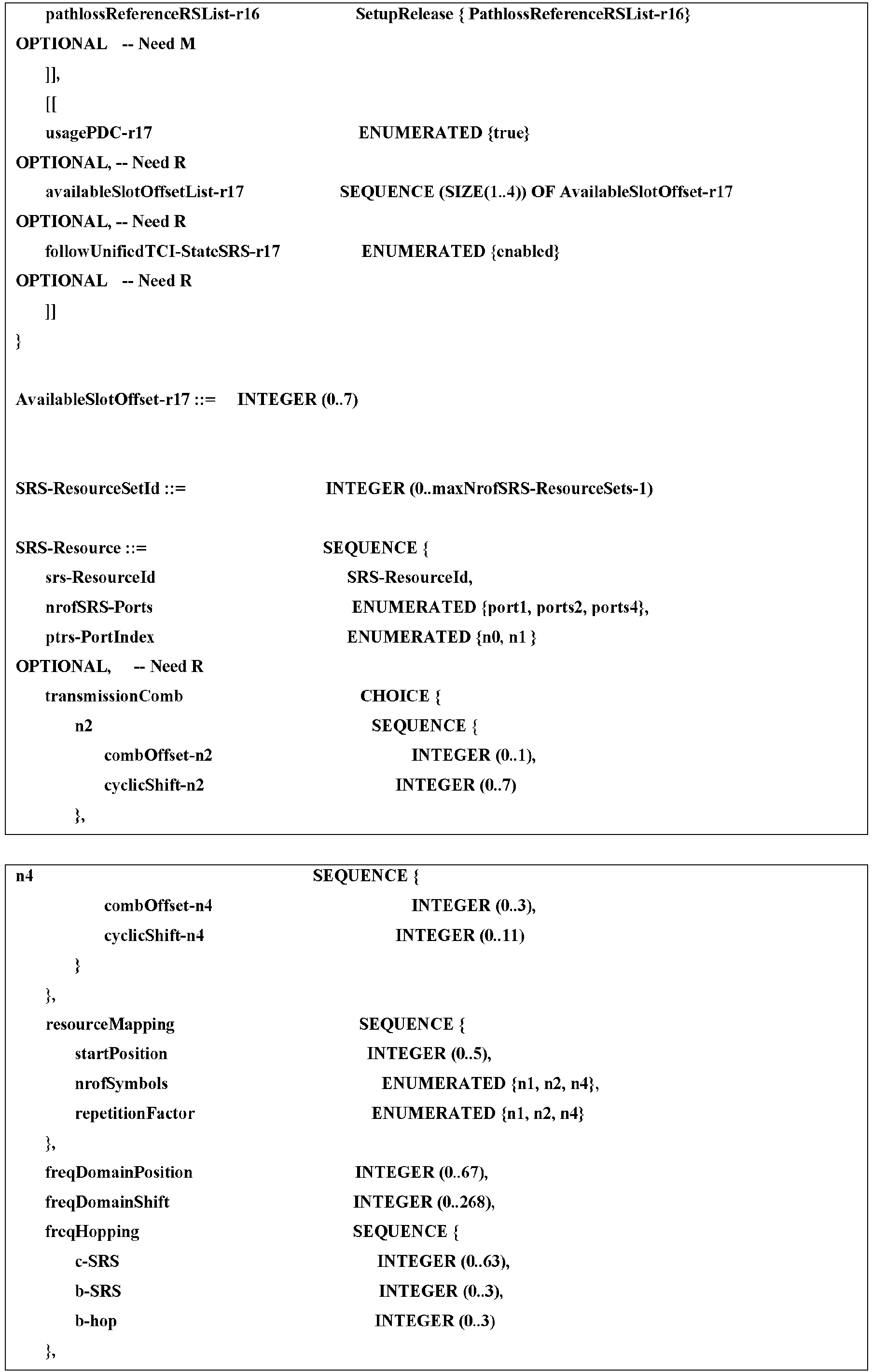

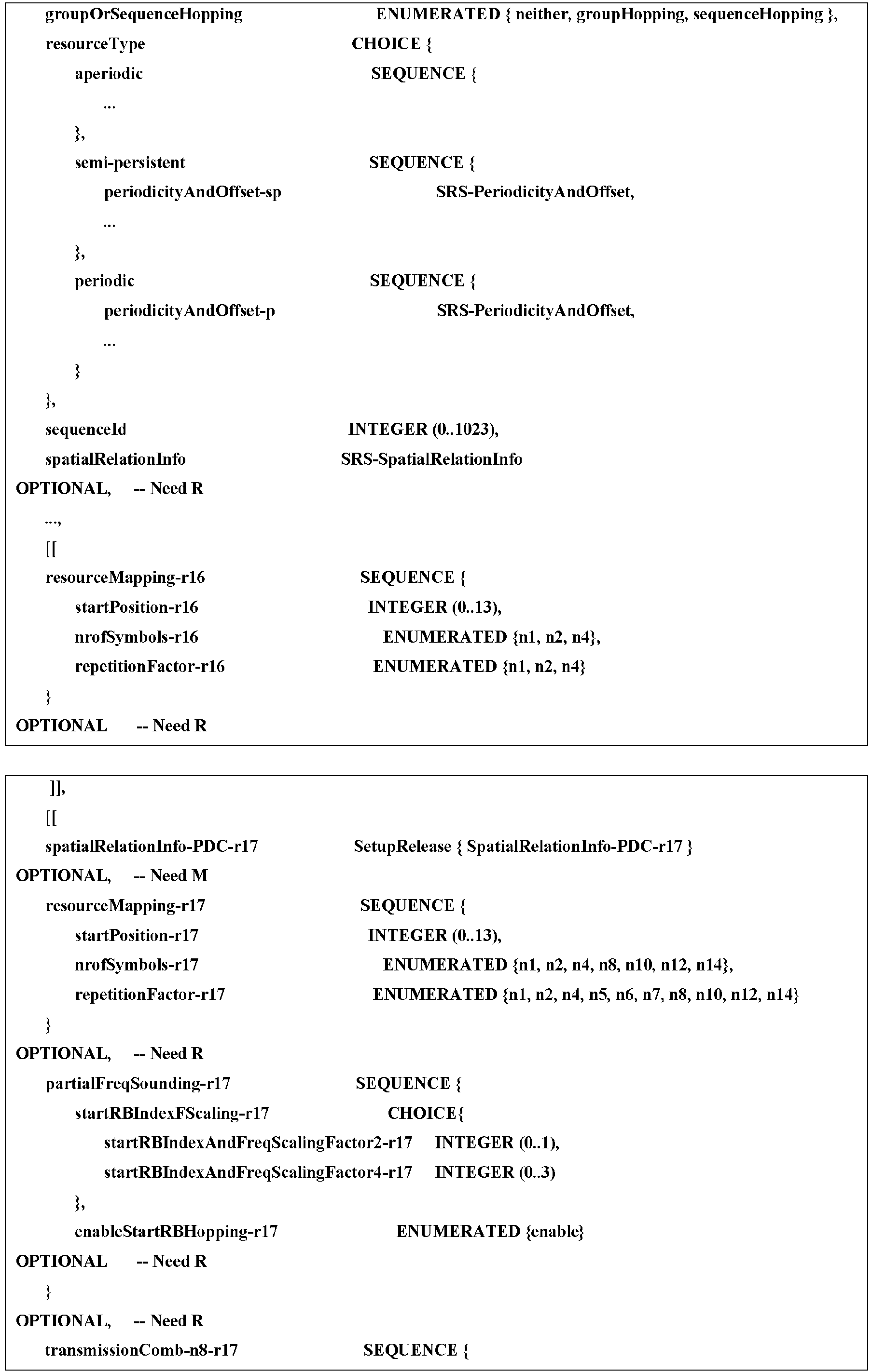

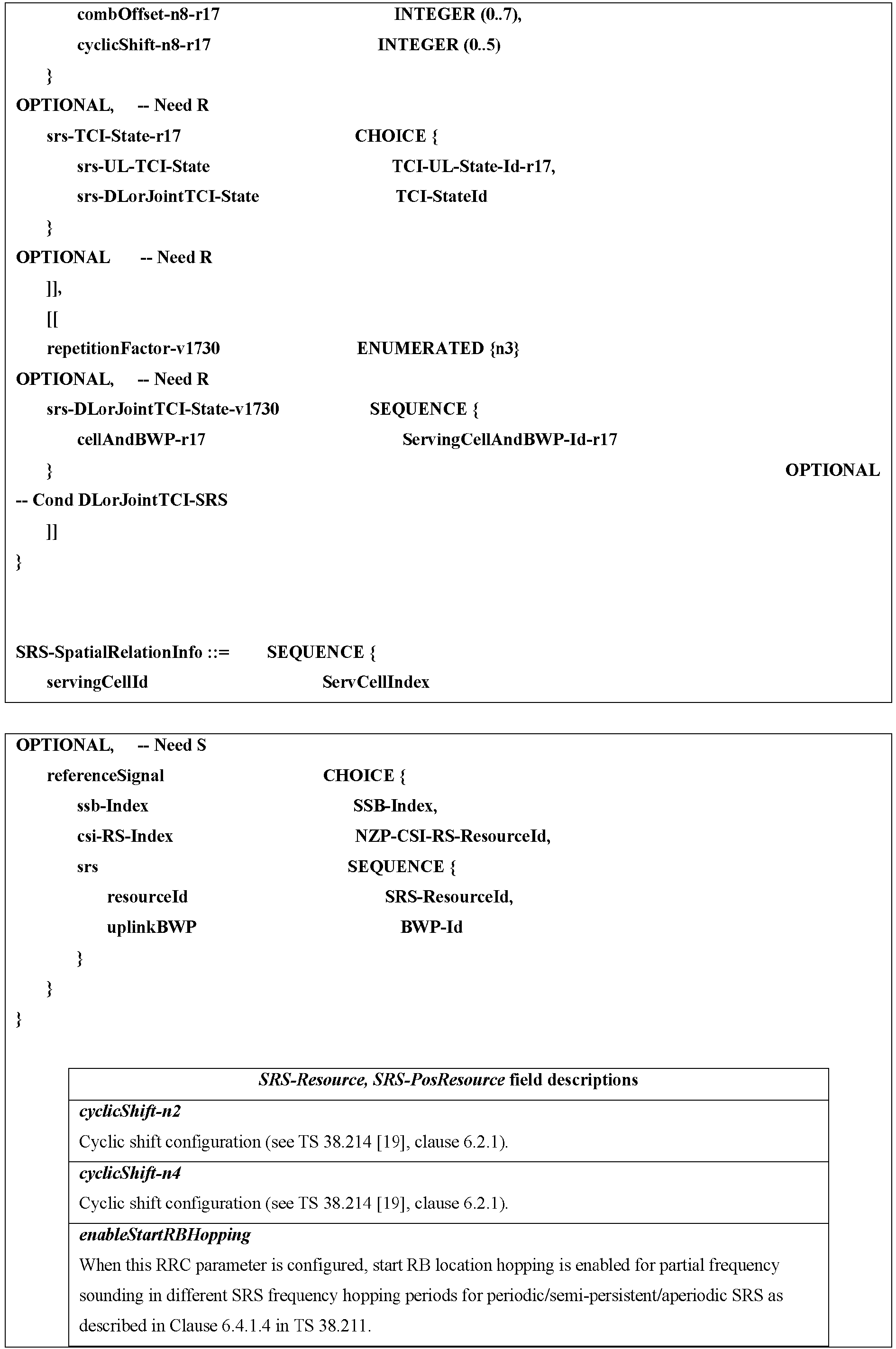

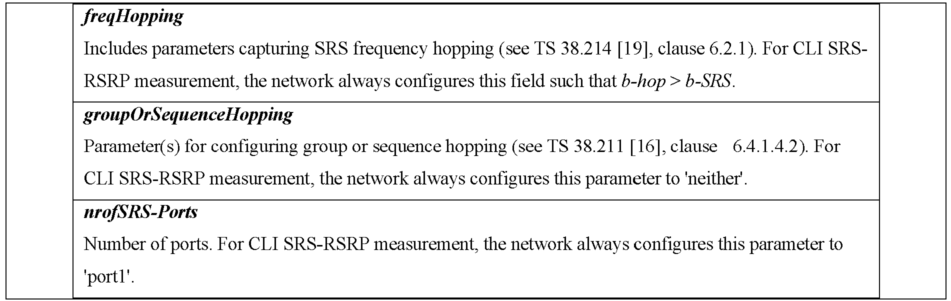

| | | |
|---|---|---|
| | ***periodicityAndOffset-sp, periodicilyAndOffset-sp-Ext*** | |
| | Periodicity and slot offset for this SRS resource. All values are in "number of slots". Value *sl1* corresponds to a periodicity of 1 slot, value *sl2* corresponds to a periodicity of 2 slots, and so on. For each periodicity the corresponding offset is given in number of slots. For periodicity *sl1* the offset is 0 slots (see TS 38.214 [19], clause 6.2.1). For *SRS-PosResource,* values *sl20480, sl40960 and sl81920* cannot be configured for SCS=15kHz, values *sl40960* and *sl81920* cannot be configured for SCS=30kHz, and value *sl81920* cannot be configured for SCS=60kHz. | |
| | When *periodicityAndOffset-sp-Ext* is present, *periodicityAndOffset-sp* shall be ignored by the UE. | |
| | ***ptrs-PortIndex*** | |
| | The PTRS port index for this SRS resource for non-codebook based UL MIMO. This is only applicable when the corresponding *PTRS-UplinkConfig* is set to CP-OFDM. The *ptrs-PortIndex* configured here must be smaller than the *maxNrofPorts* configured in the *PTRS-UplinkConfig* (see TS 38.214 [19], clause 6.2.3.1). This parameter is not applicable to CLI SRS-RSRP measurement. | |
| | ***resourceMapping*** | |
| | OFDM symbol location of the SRS resource within a slot including *nrofSymbols* (number of OFDM symbols), *startPosition* (value 0 refers to the last symbol, value 1 refers to the second last symbol, and so on) and *repetitionFactor* (see TS 38.214 [19], clause 6.2.1 and TS 38.211 [16], clause 6.4.1.4). The configured SRS resource does not exceed the slot boundary. If *resourceMapping-r16* is signalled, UE shall ignore the *resourceMapping* (without suffix). If *resourceMapping-r17* is signalled, *resourceMapping-r16* is not signalled and the UE shall ignore the *resourceMapping* (without suffix) and only the values of nrofSymbols which are integer multiples of the configured repetitionFactor can be configured. The network can only signal *repetitionFactor-v1730* if *resourceMapping-r17* is signalled. When *repetitionFactor-v1730* is signalled, the UE shall ignore *repetitionFactor-r17.* For CLI SRS-RSRP measurement, the network always configures *nrofSymbols and repetitionFactor* to 'n1'. | |
| | ***resourceType*** | |
| | Periodicity and offset for semi-persistent and periodic SRS resource (see TS 38.214 [19], clause 6.2.1). | |
| | For CLI SRS-RSRP measurement, only 'periodic' is applicable for *resourceType.* | |
| | ***sequenceId*** | |
| | Sequence ID used to initialize pseudo random group and sequence hopping (see TS 38.214 [19], clause 6.2.1). | |
| | ***servingCellId*** | |
| | The serving Cell ID of the source SSB, CSI-RS, or SRS for the spatial relation of the target SRS resource. If this field is absent the SSB, the CSI-RS, or the SRS is from the same serving cell where the SRS is configured. | |
| | ***spatialRelationInfo*** | |
| | Configuration of the spatial relation between a reference RS and the target SRS. Reference RS can be SSB/CSI-RS/SRS (see TS 38.214 [19], clause 6.2.1). This parameter is not | |

| | | |
|---|---|---|
| | applicable to CLI SRS-RSRP measurement. This field is not configured if *unifiedTCI-StateType* is configured for the serving cell. | |
| | ***spatialRelationInfo-PDC*** | |
| | Configuration of the spatial relation between a reference RS and the target SRS. Reference RS can be SSB/CSI-RS/SRS/DL-PRS-PDC (see TS 38.214 [19], clause 6.2.1). The field is present in case of *resourceType=periodic* and u*sagePDC-r17=true* in the *SRS-ResourceSet,* otherwise the field is absent. | |
| | ***spatialRelationInfoPos*** | |
| | Configuration of the spatial relation between a reference RS and the target SRS. Reference RS can be SSB/CSI-RS/SRS/DL-PRS (see TS 38.214 [19], clause 6.2.1). | |
| | If the IE *srs-ResourceId-Ext* is present, the IE *srs-ResourceId* in *spatialRelationInfoPos* represents the index from 0 to 63. Otherwise the IE *srs-ResourceId* in *spatialRelationInfoPos* represents the index from 0 to 31. | |
| | ***srs-RequestDCI-0-2*** | |
| | Indicate the number of bits for "SRS request"in DCI format 0_2. When the field is absent, then the value of 0 bit for "SRS request" in DCI format 0_2 is applied. If the parameter *srs-RequestDCI-0-2* is configured to value 1, 1 bit is used to indicate one of the first two rows of Table 7.3.1.1.2-24 in TS 38.212 [17] for triggered aperiodic SRS resource set. If the value 2 is configured, 2 bits are used to indicate one of the rows of Table 7.3.1.1.2-24 in TS 38.212 [17]. When UE is configured with *supplementaryUplink,* an extra bit (the first bit of the SRS request field) is used for the non-SUL/SUL indication. | |
| | ***srs-RequestDCI-1-2*** | |
| | Indicate the number of bits for "SRS request" in DCI format 1_2. When the field is absent, then the value of 0 bit for "SRS request" in DCI format 1_2 is applied. When the UE is configured with *supplementaryUplink,* an extra bit (the first bit of the SRS request field) is used for the non-SUL/SUL indication (see TS 38.214 [19], clause 6.1.1.2). | |
| | ***srs-ResourceSetToAddModListDCI-0-2*** | |
| | List of SRS resource set to be added or modified for DCI format 0_2 (see TS 38.212 [17], clause 7.3.1). | |
| | ***srs-ResourceSetToReleaseListDCI-0-2*** | |
| | List of SRS resource set to be released for DCI format 0_2 (see TS 38.212 [17], clause 7.3.1). | |
| | ***srs-TCI-State*** | |
| | Configuration of either a UL TCI state or a joint TCI state for the SRS resource. In case of *UL TCI-State,* refers to the TCI state defined in *ul-TCI-StateList* in the *BWP-UplinkDedicated* where the *SRS-Config* is configured. In case of DL or joint TCI state, refers to a TCI state defined in *dl-OrJointTCI-StateToAddModList* in *pdsch-Config* of the *BWP-DownlinkDedicated* and serving cell indicated by *cellAndBWP.* This field is absent when the SRS resource is in an *SRS-ResourceSet* configured with *followUnifiedTCI-StateSRS-r17* or when the field *unifiedTCI-StateType* is not configured to the serving cell which the SRS resource is located in. | |

| | | |
|---|---|---|
| | **SR*startRBIndexAndFreqScalingFactor*** | |
| | Configures the UE with the startRBIndex and freqScalingFactor for partial frequency sounding as described in Clause 6.4.1.4 in TS 38.211. The startRBIndexForFScaling2 gives the startRBIndex when freqScalingFactor is 2 and the startRBIndexForFScaling4 gives the startRBIndex when FreqScalingFactor is 4 | |
| | ***transmissionComb, transmissionComb-n8*** | |
| | Comb value (2 or 4 or 8) and comb offset (0..combValue-1) (see TS 38.214 [19], clause 6.2.1). | |

In Table 1, usage refers to a higher layer parameter to indicate whether the SRS resource set is used for beam management or is used for codebook based or non-codebook based transmission. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.
- The UE determines the Tx beam for the SRS resource to be transmitted based on SRS-SpatialRelation Info contained in the SRS-Config IE in S120. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS via the determined Tx beam in S130.
- Additionally, the UE may or may not receive feedback on the SRS from the base station (S140).

At least one of the operations of the UE/base station based on the above S110 to S140 may be applied in combination with embodiments related to Rel-18 SRS enhancement to be described later (e.g., at least one of Proposal 1, Proposal 1-1, Proposal 1-2, Proposal 1-3, and/or Proposal 2).

### SRS enhancement in Rel-17 MIMO

The importance of UE SRS transmission for securing UL and DL channel estimation performance in an NR TDD system has increased. Accordingly, standardization was carried out in Rel-17 MIMO with the following three goals:

First, standardization was carried out with the goal of more flexibly controlling aperiodic SRS transmission according to the DL and UL slot ratios and traffic conditions of various TDD systems.

Second, an NR UE supporting DL rank 8 transmission must be equipped with at least 8 receiving antennas, but an SRS antenna change transmission technique for estimating DL channels based on channel reciprocity in the NR TDD system only supports up to a UE with up to receiving antennas-. Therefore, Rel-17 was standardized with the goal of supporting SRS antenna change transmission techniques for a UE equipped with more than four receiving antennas.

Third, standardization was carried out for the purpose of increasing the transmission coverage of the SRS and increasing the capacity of the SRS considering simultaneous access of multiple UEs.

### More flexible aperiodic SRS transmission trigger technique

FIG. 2 is a diagram illustrating flexible aperiodic SRS transmission timing control.

In Rel-17 MIMO, two following techniques are standardized in order to more flexibly control aperiodic SRS transmission according to the DL and UL slot ratios and traffic conditions of various TDD systems.

First, a technique is introduced to dynamically control a slot offset value for an aperiodic SRS transmission trigger via the DCI. This is to solve a problem that SRS transmission may be significantly delayed depending on the DL and UL slot configurations because the existing slot offset value is fixed semi-persistently.

To this end, a new DCI field is defined that specifies one of a plurality of slot offset values set in the RRC message. In addition, the slot offset value indicated through the DCI field is standardized to be calculated based on available slots defined as slots composed of uplink slots and flexible symbols, thereby enabling flexible SRS transmission triggering with a small number of slot offset candidate values.

Second, a technique of trigger aperiodic SRS transmission without accompanying UL data transmission and CSI reporting is introduced. According to the existing scheme, in the SRS transmission, the SRS may be triggered together with the SRS through UL DCI only when PUSCH is allocated to trigger UL data and/or CSI reporting. It is difficult for the BS to estimate the UL/DL channel by triggering the SRS for the UE in a situation where there is no UL data to be transmitted and aperiodic CSI reporting is not required. This technique is intended to solve the problems described above.

### SRS antenna change transmission for UE equipped with more than 4 receiving antennas

As described above, the SRS antenna change transmission technique supported in the Rel-15/16 NR system only considers the UE equipped with four receiving antennas. In Rel-17 MIMO, the SRS antenna change transmission method for UEs equipped with 6 receiving antennas and 8 receiving antennas is standardized. The extended antenna change transmission method supports the following combinations of the number of Nt transmitting antennas and the number of Nr receiving antennas.

UE with Nr = 6: Nt=1 and Nt=2, UE with Nr = 8: Nt=1, Nt=2, and Nt=4

The above SRS transmission may be transmitted within one slot, or across two or four slots.

### SRS coverage and capacity enhancement technique

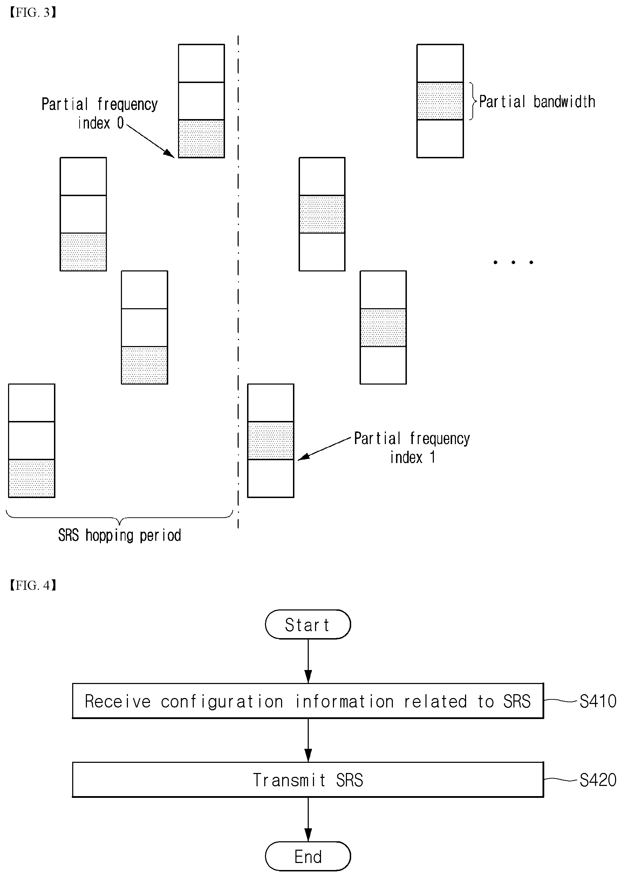

FIG. 3 is a diagram illustrating partial band SRS transmission.

In order to increase the coverage and capacity of the SRS in Rel-17 MIMO, three major techniques were introduced.

First, the maximum number of transmission repetitions of the SRS is increased so that the SRS may be used in a system requiring wider coverage. In Rel-15 and Rel-16, the SRS may be repeatedly transmitted in up to four symbols within one slot, except for positioning purposes. In Rel-17 MIMO, the SRS may be repeatedly transmitted in up to 14 symbols within the slot in order to secure wider SRS coverage. Specifically, it is possible to transmit the SRS in 8, 10, 12 or 14 consecutive symbols within the slot.

Second, the SRS may only be transmitted in a partial band. To this end, the BS may configure a resource block location and an SRS transmission band for starting SRS transmission to the UE. For SRS transmission, the frequency location may also be hopped or fixed according to set rules according to an SRS frequency hopping cycle. The introduction of this technique increased the capacity of SRS by allowing different UEs to transmit the SRS to the same BS simultaneously in different partial bands.

Last, an SRS having a lower frequency density is supported. Except for positioning in Rel-15/16, the frequency density of the supported SRS is 1 RE per 2 RE or 1 RE per 4 RE. Accordingly, stable channel estimation performance may be secured in a frequency selective channel environment, but there was a limit to securing the SRS capacity. Therefore, in Rel-17 MIMO, an additional transmission technique was introduced to transmit the SRS in 1 RE per 8 RE, thereby enabling further increase of the SRS capacity in a frequency non-selective channel environment.

What has been described above may be applied in combination with methods proposed in the present disclosure to be described below, or may be supplemented to clarify technical features of the methods proposed in the present disclosure. The methods to be described below are distinguished only for convenience of description, and it is needless to say that some components of any one method can be substituted with some components of another method or may be applied in combination with each other.

In NR Rel-15 MIMO, SRS may be utilized for UL link adaptation usage (codebook/non-codebook), beam management usage, and DL CSI acquisition (antenna switching) usage. Rel-17 FeMIMO, standardization was carried out to increase the number of repetitions, introduce RPFS (RB-level Partial Frequency Sounding), and support comb value 8 in order to improve the coverage and capacity of SRS.

In Rel-18, a discussion on enhancement that introduces SRS or 8 port transmission is underway in light of a UE capable of 8 Tx transmission. Rel-18 includes content on SRS enhancement in order to support up to 8 layer PUSCH transmission in relation to SRS as in Table 2 below.

**[Table 2]**

| | | |
|---|---|---|
| | 1. Study, and if justified, specify enhancements of CSI acquisition for Coherent-JT targeting FR1 and up to 4 TRPs, assuming ideal backhaul and synchronization as well as the same number of antenna ports across TRPs, as follows: | |
| | | - Rel-16/17 Type-II codebook refinement for CJT mTRP targeting FDD and its associated CSI reporting, taking into account throughput-overhead trade-off |
| | | - SRS enhancement to manage inter-TRP cross-SRS interference targeting TDD CJT via SRS capacity enhancement and/or interference randomization, with the constraints that 1) without consuming additional resources for SRS; 2) reuse existing SRS comb structure; 3) without new SRS root sequences |
| | | - Note: the maximum number of CSI-RS ports per resource remains the same as in Rel-17, i.e. 32 |
| | **2. Study, and if justified, specify UL DMRS, SRS, SRL and TPMI (including codebook) enhancements to enable 8 Tx UL operation to support 4 and more lavers per UE in UL targeting CPE/FWA/vehicle/Industrial devices** | |
| Note: Potential restrictions on the scope of this objective (including coherence assumption, full/non-full power modes) will be identified as part of the study. | | |

Moreover, as in the standardization agreements below (Table 3), a discussion on SRS resource configuration is underway to support eight ports for an SRS having usage of antenna switching, codebook, and non-codebook but not of beam management.

To support 8 port SRS in antenna switching and codebook usage, a discussion on the following i) and ii) is underway.
i) Whether to utilize eight ports in a single SRS resource or utilize eight ports in multiple SRS resources.
ii) Whether to utilize eight ports in one OFDM symbol or utilize eight ports in multiple OFDM symbols where different ports are mapped to different symbols.

In this case, in antenna switching and codebook usage, in a case where eight ports in a single SRS resource with multiple symbols or/and eight ports in multiple SRS resources are introduced, the eight ports may be configured as follows.

The eight ports may be divided and configured in multiple symbols in a single SRS resource. For example, four ports may be configured in each of two symbols.

The eight ports may be divided and configured in multiple SRS resources. For example, four ports may be configured in each of two SRS resources.

At this time, frequency domain resource allocation (FDRA) configuration for n ports (e.g., four ports) (which are divided and configured) may need to be supported.

The following Table 3 shows standardization agreements for SRS enhancement.

**[Table 3]**

| | | | |
|---|---|---|---|
| **Agreement** | | | |
| For Rel-18 reference signal enhancements, support and specify the following features (the agreed WID scopes apply): | | | |
| | - SRS enhancement to manage inter-TRP cross-SRS interference targeting TDD CJT via SRS capacity enhancement and/or interference randomization, | | |
| | | | RAN1 should strive to minimize the number of schemes supported in Rel-18 |
| | - **SRS enhancements to enable 8 Tx UL operation and 8T8R SRS for DL operation.** | | |
| | | | **Target usage includes antenna switching, codebook/non-codebook based SRS** |
| **Agreement** | | | |
| For 8 Tx SRS, at least support | | | |
| | - 8 ports in 1 SRS resource for 'antennaSwitching', | | |
| | | | ∘ FFS 8 ports in one or multiple SRS resources for 'codebook' |
| Above does not imply support for 8 ports in one or multiple OFDM symbols | | | |
| **Agreement** | | | |
| For the maximum number of SRS resource sets for SRS with 8T8R with *'antennaSwitching',* keep the existing value of the maximum number of SRS resource sets (as provided in Rel-17 antenna switching nTnR) | | | |
| **Agreement** | | | |
| For an 8-port SRS resource in an SRS resource set with usage antennaSwitching (i.e., for 8T8R antenna switching), the 8-port SRS resource is transmitted in at least one OFDM symbol. | | | |
| | FFS: the resource transmitted in multiple OFDM symbols where different ports are mapped to different symbols. | | |
| **Agreement** | | | |
| For SRS resource set(s) with usage 'nonCodebook' support 8 1-port SRS resources in one or multiple OFDM symbols. | | | |
| | • Note: The maximum number of simultaneous SRS resources is determined via UE-capability signalling. | | |

Based on this background, the present disclosure proposes a method for a base station to configure an SRS resource in light of a 8 Tx UE and a subsequent UE SRS transmission operation.

Unless limited otherwise, the 'port' mentioned in the following embodiment may refer to 'SRS port', 'SRS antenna port', or 'antenna port'.

In this disclosure, '/' refers to 'and', 'or', or 'and/or'.

### Proposal 1

The base station may divide and configure eight ports of a single SRS resource (i.e., single SRS resource for 8 Tx) in multiple symbols (e.g., n symbols, n>1) to a UE.

For x ports (x is a natural number from 1~8) corresponding to each of the n symbols, frequency domain resource allocation (FDRA) may be performed. That is, in a specific SRS resource, FDRA-related parameters such as i) transmissionComb, ii) freqDomainPosition, iii) freqDomainShift, iv) freqHopping (c-SRS, b-SRS, b-hop), etc. may be configured as an n number.

For example, in a specific 8 ports SRS resource, eight ports may be divided between two OFDM symbols, with four ports configured in each OFDM symbol. FDRA-related parameters may be configured in the symbols corresponding respectively to four ports for the first (symbol) and four ports for the second (symbol). Also, FDRA-related parameters such as i) transmissionComb, ii) freqDomainPosition, iii) freqDomainShift, iv) freqHopping (c-SRS, b-SRS, and b-hop), etc. may be configured as two for this SRS resource.

In addition, in an example in which eight ports are divided and configured in multiple symbols in the signle SRS resouce, the following embodiment may be considered. Specifically, at least one of time domain resource allocation (TDRA)-related parameters, as well as FDRA-related parameters, may be configured as an n number. For example, at least one of i) startPosition, ii) nrofSymbols, and/or iii) repetitionFactor may be configured as an n number within resourceMapping IE.

According to one embodiment, there is proposed a method in which, even if only one of TDRA-related parameters is configured in the SRS resource, nrofSymbols is divided among n x ports. For example, it may be supposed that nrofSymbols is set to 8 and eight ports are divided into groups of four ports. The first four ports and the second four ports may be mapped to respective groups of four symbols. Specifically, the first four ports may be mapped to the first four symbols among the eight symbols, and the second four ports may be mapped to the second four symbols.

For example, 'first/second' may be distinguished by index (e.g., port index and symbol index). The first four ports may be based on port indexes 0~3, and the second four ports may be based on port indexes 4~7. The first four symbols may be based on symbol indexes a~a+3 (e.g., a is an integer greater than or equal to 0), and the second four symbols may be based on symbol indexes a+4~a+7.

That is, nrofSymbols may need to be configured in such a way that n x ports are evenly mapped (in the above example, the number of symbols is set to 8, and four ports are mapped evenly to four symbols among the eight symbols). Here, a repetitionFactor configured with one value (that is, the repetitionFactor when only one repetitionFactor is configured) may apply equally to the first four symbols and the second four symbols.

According to an embodiment, when eight ports are divided and configured in multiple symbols for a single SRS resource, a configuration based on the following [1] and [2] may be applied.

[1] i) The above FDRA-related parameters (transmissionComb, freqDomainPosition, freqDomainShift, freqHopping(c-SRS, b-SRS, and b-hop)) or/and ii) sequence-related parameters (code domain resource) may be configured as a singular number as it is with the existing ones. The sequence-related parameters may include at least one of i) cyclic Shift, ii) groupOrSequenceHopping, and/or iii) sequenceId.

[2] Port indexes of x ports (x is a natural number from 1~8) corresponding to each of n symbols may be configured per symbol. For example, in a specific 8 ports SRS resource, eight ports may be divided between two OFDM symbols, with four ports configured in each OFDM symbol.

In this case, the FDRA-related parameters and the sequence-related parameters may be configured as a singular number for the SRS resource, port indexes 1~4 may be configured for the first symbol, and port indexes 5~8 may be configured for the second symbol.

### Proposal 1-1

Some of the parameters configured as an n number for a specific SRS resource in the Proposal 1 may be set to the same value.

For example, at least one parameter (parameter configured as a plural number) of the FDRA-related parameters and/or TDRA-related parameters may be set to the same value. For example, a value set for at least one parameter (parameter configured as a plural number) of the FDRA-related parameters and/or TDRA-related parameters may be limited to a specific value among values that can be set for this parameter.

This will be concretely described with an example.

It may be supposed that two transmissionCombs are configured. The com value of the first transmissionComb and the comb value of the second transmissionComb may be set to the same value (e.g., n2).

It may be supposed that two freqDomainPositions are configured. The first freqDomainPosition and the second freqDomainPosition may be set to the same value (e.g., one of values 0~67).

For example, at least one of freqDomainPosition, freqDomainShift, c-SRS, b-SRS, and b-hop may be set to the same value. Through this, x ports corresponding to each symbol may be configured to have i) the same SRS bandwidth, ii) the same frequency domain position, and/or iii) the same settings for frequency hopping or non-frequency hopping.

For example, in transmissionComb configuration, at least one of comb value, combOffset, and cyclic Shift may be set to the same value. Througn this, x ports corresponding to each symbol may be configured to have i) the same density (i.e., the same frequency density) within an SRS bandwidth, ii) the same frequency domain position based on the same comb offset value, and/or iii) the same cyclic shift value.

In TDRA-related parameters configured as an n number for a specific SRS resource in the Proposal 1, at least one of nrofSymbols and repetitionFactor may be set to the same value. Channel estimation by the base station for x ports configured in each of n symbols may be performed under the same condition (the same number of symbols and number of repetitions).

### Proposal 1-2

In configuring x ports (x is a natural number from 1~8) corresponding to each of n symbols for a specific SRS resource in the Proposal 1, some parameters may be configured in the form of an offset value. Specifically, when the some parameters are configured for the (first) x ports of the first symbol, an offset value for a value set for the (first) x ports of the first symbol may be set for the (second/third..) x ports configured in each of remaining symbols.

That is, some parameters within the SRS resource may be configured with (n-1) offset values. In other words, an offset value may be set for each of the remaining symbols (n-1 symbols), other than the first symbol among the n symbols.

The some parameters may include at least one of combOffset and cyclic Shift.

For example, it may be supposed that, in a specific 8 ports SRS resource, eight ports may be divided between two OFDM symbols, with four ports configured in each OFDM symbol. In this case, transmissionComb configuration (e.g., n4) may be performed as follows for the four ports of the first (symbol). combOffset may be set to 0, and cyclic Shift may be set to 0.

The combOffset or/and cyclicShift for the four ports of the second (symbol) may be configured as an offset value for the above set combOffset (0) or/and cyclic Shift value (0).

It may be supposed that, in a specific 8 ports SRS resource, eight ports may be divided between two OFDM symbols, with four ports configured in each OFDM symbol. In this case, the following embodiment may be considered.

Only one offset value may be set to configure the combOffset or/and cyclic Shift of the remaining three symbols, other than the first symbol. In other words, one offset value may be set and applied to each of the remaining three symbols, rather than three offset values being set to configure the combOffset or/and cyclic Shift of the remaining three symbols.

Specifically, only one offset value may be set, and the one offset value may be therefore applied as an offset for the combOffset or/and cyclicShift values of the previous symbol (e.g, first/second/third symbol). For example, the combOffset or/and cyclic Shift values of the second symbol may be determined by adding the one offset value to the combOffset or/and cyclic Shift values of the first symbol. For example, the combOffset or/and cyclic Shift values of the third/fourth symbol may be determined by adding the one offset value to the combOffset or/and cyclicShift values of the second/third symbol.

For example, if only one offset value of 1 is set for combOffset, the combOffset values of the first/second/third/fourth symbols may be 0, 1, 2, and 3, respectively.

For example, if only one offset value of 2 is set for cyclic Shift, the cyclicShfit values of the first/second/third/fourth symbols may be 0, 2, 4, and 6, respectively. According to this embodiment, the following effect is derived. It is possible to reduce signaling overhead as compared with setting separate combOffset or/and cyclicShift values for each of the (n-1) symbols.

### Proposal 1-3

In a case where eight ports are mapped to n symbols in a specific SRS resource in the Proposal 1, the n symbols may be consecutive OFDM symbols. That is, eight ports may be configured/mapped to consecutive OFDM symbols without a gap symbol.

According to the existing method, the gap symbol is configured as follows. If an SRS resource set is configured for antenna switching usage, a gap symbol (i.e., guard period) for antenna switching is configured between SRS resources where different ports are configured within the same slot. The guard period may be set to 1, 2, 7, or 14 symbol(s) per subcarrier spacing configuration.

According to this embodiment, even if the usage of an SRS resoruce set including the specific SRS resource is antenna switching, no gap symbol (guard period) may be configured between the n symbols. As above, eight ports may be configured/mapped to n consecutive symbols.

In the existing antenna switching SRS operation, a transient period is required to switch Rx/Tx port(s) of UE to (an SRS resource corresponding to) other Rx/Tx port(s). The transitent period may be the time required for RF switching operation (for example, a switching operation of a radio frequency module/chain). Since different Rx/Tx port(s) correspond to different SRS resources, time domain resource allocation was performed such that a guard period is present between the SRS resources. According to the existing method described above, a guard period of a Y symbol(s) is configured between SRS resources of an SRS resource set for antenna switching.

However, in Rel-18, it is assumed that a 8 Tx UE is a UE capable of UL 8 layer transmission. In other words, the UE may perform 8 port UL transmission simultaneously. Since there is no need to consider a transient period for RF switching between each symbol corresponding to a different port(s), this embodiment may be applied.

It is possible to prevent the waste of resources caused by configuring a gap period through the foregoing embodiment.

### Proposal 2

In a case where the base station configures a UE with eight ports in multiple SRS resources, the following embodiments may be considered.

According to an embodiment, in configuring each of the SRS resources, some of the FDRA-related parameters or/and sequence-related parameters may be set to the same value as in the Proposal 1 (Proposal 1-1). In other words, a value that can be set for some of the FDRA-related parameters or/and sequence-related parameters may be limited to one of values that can be set for that parameter.

According to an embodiment, in configuring the SRS resources, some of the TDRA-related parameters may be set to the same value as in the Proposal 1. In other words, a value that can be set for some of the TDRA-related parameters may be limited to one of values that can be set for that parameter.

According to an embodiment, in the TDRA configuration of the SRS resources, the symbol-level positions of different SRS resources may be configured to not overlap. For examle, SRS resource configuration by the base station may be performed under the above limitation.

According to an embodiment, even if the symbol-level positions of the different SRS resources are allowed to overlap, the different SRS resources may be forcedly configured to have the exactly same symbol position and duration (i.e., to be positioned in the same symbol(s)). Through this operation/configuration, the UE may simultaneously transmit multiple SRS resources constituting eight ports in the same symbol(s). The base station may perform channel sounding for UL/DL 8 ports in the same (instantaneous) channel environment.

According to an embodiment, the following operation/configuration may be performed for a UE not capable of STxMP transmission.

For each of the multiple SRS resources, TCI state or/and spatialRelationInfo may be set to the same value. In other words, TCI state or/and spatialRelationInfo that can be configured in each of the multiple SRS resources may be limited to the same TCI state or/and spatialRelationInfo. That is, the above operation may mean that the UE performs up to 8 Tx transmission (i.e., transmission based on up to eight layers) in relation to a single panel.

If a specific UE is capable of STxMP transmission, TCI state or/and spatialRelationInfo may be set to a different value (not the same value) for each of the multiple SRS resources. That is, the above operation may mean that a UE performs up to 8 Tx transmission (i.e., transmission based on up to eight layers) in relation to multiple panels/TRPs.

The embodiments of the Proposal 1 or Proposal 2 may be applied/implemented in combination unless they are under contradictory conditions/configurations.

Below is an example of a UE (base station) operation based on at least one of the foregoing embodiments (e.g., at least one of Proposal 1 or Proposal 2).
1) The UE (base station) receives (transmits) SRS-related configuration information.
   The above configuration information may include FDRA/TDRA/sequence-related configuration for SRS resource(s) within an SRS resource set with specific usage (e.g., codebook or/and antennaSwitching) based on Proposal 1 or Proposal 2).
2) The UE transmits an SRS per P/SP/AP-SRS transmission configuration/activation/instruction (that is, the base station receives this SRS from the UE).

In this case, the UE transmits an SRS based on the SRS resource set configured/activated/indicated by RRC/MAC CE/DCI based on the configuration of Proposal 1 or Proposal 2.

The above UE/base station operation is only an example, and each operation (or step) is not necessary and an operation related to the SRS transmission of the UE according to the foregoing embodiments may be omitted or added depending on the method of UE/base station implementation.

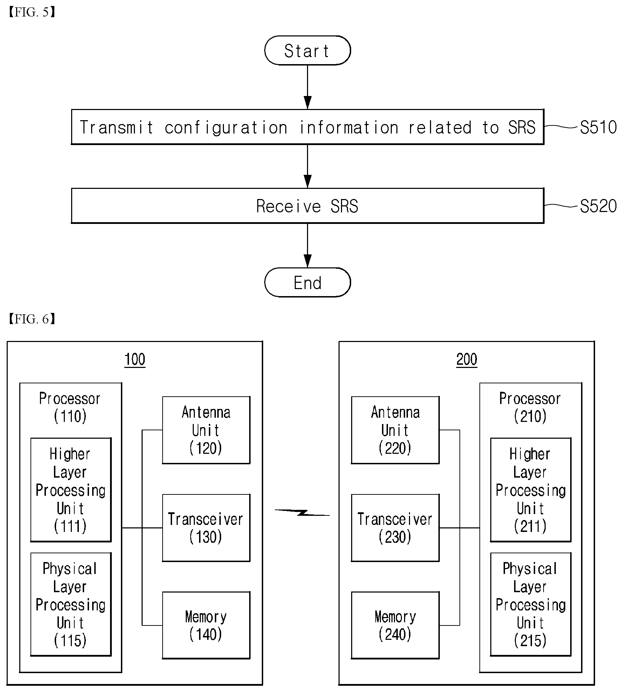

In terms of implementation, the operations (e.g., operations based on at least one of Proposal 1, Proposal 1-1, Proposal 1-2, Proposal 1-3, and/or Proposal 2) of the base station/UE according to the foregoing embodiments may be handled by devices in FIG. 6 (e.g., the processors 110 and 210 in FIG. 6) to be described later.

Moreover, the operations (e.g., operations based on at least one of Proposal 1, Proposal 1-1, Proposal 1-2, Proposal 1-3, and/or Proposal 2) of the base station/UE according to the foregoing embodiments may be stored in memories (e.g., 140 and 240 in FIG. 6) in the form of a command/program (e.g., instruction or executable code) for driving at least one processor (110 and 210 in FIG. 6).

Hereinafter, the foregoing embodiments will be described in detail with reference to FIG. 4 and FIG. 5 in terms of of the operations of the UE and base station. The methods to be described below are distinguished only for convenience of description, and it is needless to say that some components of any one method can be substituted with some components of another method or may be applied in combination with each other.

FIG. 4 is a flowchart for describing a method performed by a user equipment according to an embodiment of the present disclosure.

Referring to FIG. 4, a method performed by a UE in a wireless communication system according to one embodiment of the present disclosure includes an SRS-related configuration information receiving step S410 and an SRS tramsmitting step S420.

In S410, the UE receives configuration information related to a sounding reference signal (SRS) from the base station. The configuration information includes information for at least one SRS resource. For example, the configuration inofrmation may be based on the SRS-Config of Table 1. The usage of an SRS resource set to which the at least one SRS resource belongs may be configured as codebook, non-codebook, beam management, or antenna switching.

The configuration information may include information related to a configuration based on at least one of the above-described Proposal 1, Proposal 1-1, Proposal 1-2, Proposal 1-3, and/or Proposal 2.

According to an embodiment, the at least one SRS resource may be associatd with eight ports. For example, the eight ports may be configured in a single SRS resource. For example, the eight ports may be configured in multiple SRS resources.

According to an embodiment, the eights ports may be mapped to a plurality of symbols related to the at least one SRS resource. The mapping may mean that the eight ports are evenly divided and mapped to a plurality of symbols.

Specifically, the number of one or more ports associated with each of the plurality of symbols may be the same. For example, if the plurality of symbols are two symbols, the number of ports mapped to each symbol may be four. In a concrete example, the plurality of symbols may be two symbols. Four ports among the eight ports may be mapped to the first symbol (or 1st symbol) among the two symbols. Remaining four ports among the eight ports may be mapped to the second symbol (or 2nd symbol) among the two symbols. For example, the eight ports may be evenly mapped to each of the plurality of symbols. Specifically, the number (e.g., 4) of port(s) mapped to each symbol may be determined by dividing the number (e.g., 8) of the ports by the number of the plurality of symbols (e.g., 2). This embodiment may be based on Proposal 1 or Proposal 2.

According to an embodiment, i) first parameters related to frequency domain, ii) second parameters related to time domain, and iii) third parameters related to sequence may be configured in the at least one SRS resource.

Here, the first parameters, the second parameters, and the third parameters may be based on the above Proposal 1/2. Specifically, the first parameters may be based on the FDRA-related parameters. The second parameters may be based on the TDRA-related parameters. The third parameters may be based on the sequence-related parameters.

The first parameters may include i) transmissionComb related to Transmission comb value, ii) freqDomainPosition related to frequency domain position, iii) freqDomainShift related to frequency domain shift, and iv) freqHopping related to frequency hopping. In this case, the first parameters may include combOffset and cyclicShift which are configured based on the transmissionComb value (e.g., n2 or n4, see Table 1).

The second parameters may include i) startPosition related to start symbol position, ii) nrofSymbols related to the number of symbols, and iii) repetitionFactor related to repetitions of the SRS.

The third parameters may include i) groupOrSequenceHopping related to group hopping and/or sequence hopping and ii) sequenceId for sequence initialization.

For example, the first/second/third parameters may include parameters configured within the SRS-Resource of Table 1.

At least one of the above first to third parameters may be configured as a plural number or as a singular number based on the number of the plurality of symbols. This will be concretely described below.

According to an embodiment, at least one of the first parameters may be configured as a plural number based on the number of the plurality of symbols. This embodiment may be based on Proposal 1. For example, one (e.g., 'startPosition') of the first parameters may be configured as a plural number. Specifically, if the number of the plurality of symbols is two, a startPosition related to the first symbol and a startPosition related to the second symbol may be configured in the at least one SRS resource (e.g., single SRS resource).

According to an embodiment, at least one of the second parameters may be configured as a plural number based on the number of the plurality of symbols. This embodiment may be based on Proposal 1. For example, one (e.g., 'freqDomainPosition') of the second parameters may be configured as a plural number. Specifically, if the number of the plurality of symbols is two, a freqDomainPosition related to the first symbol and a freqDomainPosition related to the second symbol may be configured in the at least one SRS resource (e.g., single SRS resource).

Some of the parameters configured as a plural number based on the foregoing embodiments may be set to the same value. This will be concretely described below.

According to an embodiment, some of a plurality of parameters configured based on the number of the plurality of symbols may be set to the same value. This embodiment may be based on Proposal 1-1.

Here, some of the plurality of parameters may refer to some of the parameters configured as a plural number. For example, it may be supposed that, among the first parameters, freqDomainPosition and freqDomainShift may be configured as a number equal to the number of the plurality of symbols. In this case, the plurality of parameters may refer to the freqDomainPosition and freqDomainShift, among the first parameters. Some of the plurality of parameters may refer to freqDomainPosition (or freqDomainShift).

For example, a freqDomainPosition related to the first symbol and a freqDomainPosition related to the second symbol according to the above example may be set to the same value. In other words, the freqDomainPosition related to the first symbol and the freqDomainPosition related to the second symbol may be set to the same value (e.g., one of 0~67), among the values (e.g., INTEGER (0..67) of Table 1) that can be set for freqDomainPosition.

The parameters configured as a plural number based on the foregoing embodiments may be configured based on one parameter and offsets for the one parameter. This will be concretely described below.

According to an embodiment, the plurality of parameters configured based on the number (e.g., n, where n>1) of the plurality of symbols may include i) a parameter related to the first symbol among the plurality of symbols and ii) parameters determined based on the parameter related to the first symbol and offsets (e.g., (n-1) offsets) related to remaining symbols. This embodiment may be based on Proposal 1-2.

For example, if the number of the plurality of symbols is two, combOffset and/or cyclic Shift, among the first parameters, may be configured as two. In a concrete example, a combOffset related to the first symbol and a combOffset related to the second symbol may be configured. In this case, if the combOffset related to the first symbol is set to 1, the combOffset related to the second symbol may be set based on an offset (e.g., 2) for the combOffset(1) related to the first symbol. That is, the combOffset related to the second symbol may be set to 3.

That is, if the number of the plurality of symbols is n, one parameter (e.g., at least one (combOffset) of the first parameters) and offsets (e.g., (n-1) offsets) for the one parameter may be configured in the at least one SRS resource.

According to an embodiment, indexes of the one or more ports associated with each symbol may be configured in the at least one SRS resource. This embodiment may be based on Proposal 1.

For example, supposing that the number of the plurality of symbols is two, i) port indexes 1~4 related to the first symbol and ii) port indexes 5~8 related to the second symbol may be configured in the at least one SRS resource.

According to the exiting method, an SRS resource set configured for antenna switching usage is configured with a guard period for antenna switching between SRS resources related to a different port(s). The guard period is for ensuring the time required for an RF module operation (e.g., RF chain change) related to antenna switching. However, in the case of a UE that supports (simultaneous) transmission based on up to eight ports (up to eight layers), there is no need to configure a separate guard period for antenna switching. An embodiment for enhancing SRS resource allocation efficiency for antenna switching will be concretely described below.

According to an embodiment, the at least one SRS resource may be based on an SRS resource set for antenna switching. The plurality of symbols may be consecutive symbols that are configured in the at least one SRS resource, without configuring a guard period for antenna switching. This embodiment may be based on Proposal 1-3. As described above, even when the SRS is configured for antenna switching, the SRS may be configured in consecutive symbols without a guard period. Since unnecessary guard period configuration is omitted in light of UE performance, resource utilization may be enhanced when SRS is configured for antenna switching.

According to an embodiment, the at least one SRS resource may include multiple SRS resources. The plurality of symbols may include one or more symbols that are configured based on the second parameters of each SRS resource. This embodiment may be based on Proposal 2.

In an example, a position of one or more symbols configured in one of the multiple SRS resources may be different from a position of one or more symbols configured in another one of the multiple SRS resources. That is, a symbol(s) related to an SRS resource may be configured to not overlap a symbol(s) related to another SRS resource.

In an example, a position of one or more symbols configured in one of the multiple SRS resources may be identical to a position of one or more symbols configured in another one of the multiple SRS resources. That is, a symbol(s) related to an SRS resource may be identical to a symbol(s) related to another SRS resource. That is, the UE may transmit an SRS based on the eight ports in the same symbols. The base station may perform channel sounding for the eight ports in the same (instantaneous) channel environment.

According to an embodiment, a Transmission Configuration Indicator (TCI) state and/or spatial relation information may be configured in each SRS resource based on a capability of the UE related to simultaneous transmission across multi panels (STxMP). This embodiment may be based on Proposal 2.

In an example, the TCI state and/or the spatial relation information which are configured in each SRS resource may be the same, based on the STxMP not being supported by the UE.

In an example, the TCI state and/or the spatial relation information which are configured in each SRS resource may be different, based on the STxMP being supported by the UE. In other words, the TCI state and/or spatial relation information configured in one of the multiple SRS resources may be different from the TCI state and/or spatial relation information configured in another one of the multiple SRS resources.

In S420, the UE transmits the SRS to the base station based on the at least one SRS resource.

For example, the SRS may be transmitted to the plurality of symbols based on the at least one SRS resource.

For example, the SRS may be transmitted to the plurality of symbols based on the eight ports.

For example, in each symbol, the SRS may be transmitted based on a port(s) mapped to the corresponding symbol.

The SRS may be a periodic SRS, an aperiodic SRS, or a semi-persistent SRS.

The method may further include a DCI reception step. In the DCI reception step, the UE receives downlink control information (DCI) related to the SRS from the base station.

In an example, the DCI may be a DCI that triggers the SRS.

In an example, the DCI may be a DCI that schedules a physical uplink shared channel (PUSCH).

The DCI reception step may be performed before S420 or after S420.

In an example, the DCI may be a DCI that triggers the SRS (or SRS resource set). In an example, the DCI may be a DCI that schedules a PUSCH after SRS transmission.

The method may further include a PUSCH transmission step. In the PUSCH transmission step, the UE transmits the PUSCH based on the DCI. The number of layers related to the PUSCH may be five or more. In an example, the PUSCH may be transmitted based on up to eight layers. The type of transmission for the PUSCH may be codebook or non-codebook. The PUSCH may be transmitted based on antenna ports. The PUSCH transmission step may be performed after the DCI reception step.

According to an embodiment, the DCI may include an SRS resource indicator (SRI) field. One or more SRS resources among the SRS resources of the SRS resource set may be determined based on the SRI field. The antenna ports may be based on ports associated with the one or more SRS resources. The ports associated with the one or more SRS resources may be based on the eight ports.

An operation based on the above-described steps S410 to S420, DCI reception step, and PUSCH transmission step may be implemented by a device of FIG. 6. For example, the UE 200 may control one or more transceivers 230 and/or one or more memories 240 so as to perform an operation based on the steps S410 to S420, DCI reception step, and PUSCH transmission step.

Hereinafter, the foregoing embodiments will be described concretely in terms of base station operation.

The steps S510 to S520, DCI transmission step, and PUSCH reception step to be described below correspond to the steps S410 to S420, DCI reception step, and PUSCH transmission step described in FIG. 4. Redundant explanation will be omitted in light of the correspondence relationship. That is, a detailed description of a base station operation to be described below may be replaced with the description/embodiment of FIG. 4 corresponding to that operation.

For example, the description/embodiment of S410~S420 of FIG. 4 may be additionally applied to the base station operation of S510~S520 to be described below. In an example, the descritpion/embodiment of the above-described DCI reception step and PUSCH transmission step may be additionally applied to the base station operation according to the DCI transmission step and PUSCH reception step to be described below.

FIG. 5 is a flowchart for describing a method performed by a base station according to another embodiment of the present disclosure.

In S510, the base station transmits, to a UE, configuration information relatd to a sounding reference signal (SRS).

In S520, the base station receives, from the UE, the SRS based on the at least one SRS resource.

The method may further include a DCI transmission step. In the DCI transmission step, the base station transmits, to the UE, downlink control information (DCI) related to the SRS. The DCI transmission step may be performed before S520 or after S520.

The method may further include a PUSCH reception step. In the PUSCH reception step, the base station receives the PUSCH from the UE based on the DCI. The PUSCH reception step may be performed after the DCI transmission step.

An operation based on the above-described steps S510 to S520, DCI transmission step, and PUSCH reception step may be implemented by a device of FIG. 6. For example, the base station 100 may control one or more transceivers 130 and/or one or more memories 140 so as to perform an operation based on the steps S510 to S520, the DCI transmission step, and the PUSCH reception step.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
receiving configuration information related to a sounding reference signal (SRS), the configuration information including information for at least one SRS resource; and
transmitting the SRS based on the at least one SRS resource,
wherein the at least one SRS resource is associated with eight ports,
wherein the eight ports are divided and mapped to a plurality of symbols related to the at least one SRS resource, and a number of one or more ports associated with each of the plurality of symbols is the same.

2. The method of claim 1, wherein i) first parameters related to frequency domain, ii) second parameters related to time domain, and iii) third parameters related to sequence are configured in the at least one SRS resource.

3. The method of claim 2, wherein the first parameters include i) transmissionComb related to Transmission comb value, ii) freqDomainPosition related to frequency domain position, iii) freqDomainShift related to frequency domain shift, and iv) freqHopping related to frequency hopping.

4. The method of claim 2, wherein the second parameters include i) startPosition related to start symbol position, ii) nrofSymbols related to the number of symbols, and iii) repetitionFactor related to repetitions of the SRS.

5. The method of claim 2, wherein the third parameters include i) groupOrSequenceHopping related to group hopping and/or sequence hopping and ii) sequenceId for sequence initialization.

6. The method of claim 2, wherein at least one of the first parameters is configured as a plural number based on the number of the plurality of symbols.

7. The method of claim 2, wherein at least one of the second parameters is configured as a plural number based on the number of the plurality of symbols.

8. The method of claim 6 or 7, wherein some of the plurality of parameters configured based on the number of the plurality of symbols are set to the same value.

9. The method of claim 6 or 7, wherein the plurality of parameters configured based on the number of the plurality of symbols include i) a parameter related to the first symbol among the plurality of symbols and ii) parameters determined based on the parameter related to the first symbol and offsets related to remaining symbols.

10. The method of claim 1, wherein indexes of the one or more ports associated with each symbol are configured in the at least one SRS resource.

11. The method of claim 1, wherein the at least one SRS resource is based on an SRS resource set for antenna switching, and the plurality of symbols are consecutive symbols that are configured in the at least one SRS resource, without configuring a guard period for antenna switching.

12. The method of claim 2, wherein the at least one SRS resource include multiple SRS resources, and the plurality of symbols include one or more symbols that are configured based on the second parameters of each SRS resource.

13. The method of claim 12, wherein a position of one or more symbols configured in one of the multiple SRS resources is different from a position of one or more symbols configured in another one of the multiple SRS resources.

14. The method of claim 12, wherein a position of one or more symbols configured in one of the multiple SRS resources is identical to a position of one or more symbols configured in another one of the multiple SRS resources.

15. The method of claim 12, wherein a Transmission Configuration Indicator (TCI) state and/or spatial relation information are configured in each SRS resource based on a capability of the UE related to simultaneous transmission across multi panels (STxMP).

16. The method of claim 15, wherein the TCI state and/or the spatial relation information which are configured in each SRS resource is the same, based on the STxMP not being supported by the UE.

17. The method of claim 1, wherein the plurality of symbols are two symbols, four ports among the eight ports are mapped to a first symbol among the two symbols, and remaining four ports among the eight ports are mapped to a second symbol among the two symbols.

18. A user equipment (UE) operating in a wireless communication system, the UE comprising:
one or more transceivers;
one or more processors; and
one or more memories operably connectable to the one or more processors, and storing instructions configured for the one or more processors to perform operations, based on execution by the one or more processors,
wherein the operations include:
receiving configuration information related to a sounding reference signal (SRS), the configuration information including information for at least one SRS resource; and
transmitting the SRS based on the at least one SRS resource,
wherein the at least one SRS resource is associated with eight ports,
wherein the eight ports are divided and mapped to a plurality of symbols related to the at least one SRS resource, and a number of one or more ports associated with each of the plurality of symbols is the same.

19. A device comprising one or more memories and one or more processors functionally connected to the one or more memories,
wherein the one or more memories include instructions configuring the one or more processors to perform operations based on being executed by the one or more processors,
wherein the operations include:
receiving configuration information related to a sounding reference signal (SRS), the configuration information including information for at least one SRS resource; and
transmitting the SRS based on the at least one SRS resource,
wherein the at least one SRS resource is associated with eight ports,
wherein the eight ports are divided and mapped to a plurality of symbols related to the at least one SRS resource, and a number of one or more ports associated with each of the plurality of symbols is the same.

20. One or more non-transitory computer-readable media storing one or more commands,
wherein one or more commands executable by one or more processors are configured for the one or more processors to perform operations,
wherein the operations include:
receiving configuration information related to a sounding reference signal (SRS), the configuration information including information for at least one SRS resource; and
transmitting the SRS based on the at least one SRS resource,
wherein the at least one SRS resource is associated with eight ports,
wherein the eight ports are divided and mapped to a plurality of symbols related to the at least one SRS resource, and a number of one or more ports associated with each of the plurality of symbols is the same.

21. A method performed by a base station in a wireless communication system, the method comprising:
transmitting configuration information related to a sounding reference signal (SRS), the configuration information including information for at least one SRS resource; and
receiving the SRS based on the at least one SRS resource,
wherein the at least one SRS resource is associated with eight ports,
wherein the eight ports are divided and mapped to a plurality of symbols related to the at least one SRS resource, and a number of one or more ports associated with each of the plurality of symbols is the same.

22. A base station that operates in a wireless communication system, comprising:
one or more transceivers;
one or more processors; and
one or more memories operably connectable to the one or more processors, and storing instructions configured for the one or more processors to perform operations, based on execution by the one or more processors,
wherein the operations include:
transmitting configuration information related to a sounding reference signal (SRS), the configuration information including information for at least one SRS resource; and
receiving the SRS based on the at least one SRS resource,
wherein the at least one SRS resource is associated with eight ports,
wherein the eight ports are divided and mapped to a plurality of symbols related to the at least one SRS resource, and a number of one or more ports associated with each of the plurality of symbols is the same.
